# EUROPÄISCHE PATENTSCHRIFT

(11) **EP 2 845 475 B1**
(45) Veröffentlichungstag und Bekanntmachung des Hinweises auf die Patenterteilung: **02.11.2016**
(21) Anmeldenummer: 14002990.1
(22) Anmeldetag: 29.08.2014
(51) Int. Cl.: A01K 13/00, A01L 3/00

(54) **HUFSCHUH**
BOOT FOR A HOOF
CHAUSSURE POUR SABOT

(30) Priorität: 09.09.2013 DE 202013008015 U
(43) Veröffentlichungstag der Anmeldung: 11.03.2015
(73) Patentinhaber: Keller, Torsten, 35321 Laubach-Ruppertsburg (DE)
(72) Erfinder: Keller, Torsten, 35321 Laubach-Ruppertsburg (DE)

(56) Entgegenhaltungen:
- DE-C1- 10 228 727
- US-B1- 7 032 367

## Beschreibung

Die Erfindung betrifft einen Hufschuh für Huftiere nach dem Oberbegriff des Patentanspruches 1.

Hufschuhe entstanden aus des Praxis des Beschlagens von Hufen von Tieren mit Hufeisen, welche aber den Nachteil haben, dass sie mit Nägeln am Huf befestigt werden müssen. Dadurch wird die Hufwand geschwächt und der Huf beschädigt. Bakterien können dann eindringen und es kann vorkommen, dass Teile der Hufwand ausbrechen. Daher können viele Huftiere nicht beschlagen werden. Da das Pferd heute überwiegend nicht mehr als Arbeitstier genutzt wird, sondern als Sportpferd im Freizeitbereich anzutreffen ist, wird ein ständiger Hufschutz oder Hufbeschlag in der Regel nicht mehr benötigt. Daher gibt es Hufschuhe als lösbaren Hufschutz. Dieser wird dem Huftier nur zur Arbeit angezogen, oder wenn der Hufabrieb größer ist als das Hornwachstum.

Gattungsgemäße Hufschuhe für Huftiere sind allgemein bekannt und bestehen im Wesentlichen aus einer Sohle, einem die Hornkapsel und die Hufsohle mindestens teilweise umgreifenden, schalenartigen Oberschuh mit seitlichen Begrenzungswänden sowie einem Spannmittel zum Fixieren des Hufschuhes an der harten Hornkapsel. Wichtig dabei ist, dass der Hufmechanismus nicht beeinträchtigt wird, und dass das Tier möglichst natürliche Bewegungen ausführen kann und möglichst wenig durch einen Hufschuh belastet wird. Weiterhin muss das An- und Ablegen eines Hufschuhes Zeit sparend und für das Tier möglichst angenehm erfolgen. Zudem sollte ein Hufschuh verliersicher gestaltet sein.

So zeigt die DE 298 21 595 U1 einen Hufschuh mit einem hufeisenförmigen Bodenteil, an dem eine an den Huf eines Tieres anzupassende Wandung angeformt ist. Die Wandung bildet dabei im hinteren Hufbereich, der Trachte, eine Kammer. Diese kann mit einem Fluid unter Druck gesetzt werden, um ein gutes Anliegen am Huf bzw. der Trachte zu gewährleisten. Nachteilig ist aber dabei, dass sich bei längerem Gebrauch der erzeugte Druck in die Weichteile überträgt. Insbesondere in der Fesselbeuge und im Ballen kann es zu Scheuerstellen kommen. Im vorderen Bereich ist ein Band angebracht, welches in seitliche Laschen eingreift und natürlich immer genau passend eingestellt werden muss. Die DE 102 28 727 C1 offenbart einen Hufschuh mit zwei sich kreuzenden Riemen als Befestigungsmittel am Huf. Im hinteren Bereich sind die beiden Riemen am Bodenteil bzw. an der Sohle befestigt, kreuzen sich, sind im Kreuzungsbereich mit einem Niet aneinander befestigt, umgreifen den Huf und kreuzen sich wiederum an der Vorderseite. Dort befinden sich in den seitlichen Bereichen des Oberschuhes zwei Schnallen zum Umlenken der Riemen. Fixiert werden die Riemen dann jeweils mit Klettverschlüssen im seitlichen Hufbereich. Jeder Riemen weist dabei einen Klettverschluss auf, wobei sein Riemenende das entsprechende Gegenstück des Klettverschlusses bildet. Die Anpassung und Anbringung an einen Huf sind dabei relativ aufwändig und die Haltbarkeit der Klettverschlüsse, insbesondere bei der üblicherweise auftretenden Verschmutzung, ist gering.

Weiterhin offenbart die DE 76 23 915 U einen nach hinten offenen Hufschuh aus Kunststoff mit mehreren Spannriemen, welche an einer offenen Sohle fixiert sind und hauptsächlich aus den Seitenbereichen heraus an einem in jeweils einem gegenüberliegenden Seitenbereich angeordneten Punkt des Oberschuhes befestigt sind. Die Gestaltung ist sehr filigran und erfordert daher sehr viel Aufwand, Erfahrung und Geschick bei der Anbringung am Huf. Außerdem sind Dauerhaltbarkeit bzw. Robustheit im normalen Einsatz mit dieser Gestaltung eingeschränkt.

Der Erfindung liegt daher die Aufgabe zu Grunde, einen Hufschuh insbesondere im Hinblick auf Tragekomfort für das Tier sowie Handhabungsfreundlichkeit bei der Nutzung zu optimieren.

Erfindungsgemäß wird dies mit den Merkmalen des Patentanspruches 1 gelöst. Vorteilhafte Weiterbildungen sind den Unteransprüchen zu entnehmen.

Der Hufschuh ist dadurch gekennzeichnet, dass der erste und der zweite Riemen im vorderen Bereich direkt miteinander und im hinteren Bereich mit einem Quersteg aneinander fixierbar sind. Dazu sind die Riemen mindestens an einem vorderen Befestigungspunkt lösbar sowie an mindestens einem hinteren Befestigungspunkt fest mit dem Oberschuh verbunden.

Gemäß einer bevorzugten Ausführungsform ist der erste Riemen als Schlaufenriemen und der zweite Riemen als Schnallenriemen ausgebildet. Dabei durchgreift der Schnallenriemen den Schlaufenriemen in einer Schlaufe im vorderen Bereich, ist durch eine Aufnahme am vorderen Befestigungspunkt am Oberschuh geführt, und mit einer Schnalle fixierbar. Weiterhin sind die Riemen bevorzugt an zwei hinteren Befestigungspunkten am Oberschuh fixiert, wobei die Befestigungspunkte beabstandet zueinander und symmetrisch zur Mittelachse des Hufschuhs angeordnet sind.

Vorteilhafterweise ist der Quersteg im hinteren Bereich als Ballensteg ausgeführt. Das heißt, er befindet sich etwa auf der Höhe des Ballens am Huf und stellt eine etwa horizontale Verbindung zwischen den beiden Riemen dar. Somit ist der Quersteg vorzugsweise in vertikaler Richtung beabstandet zur Oberkante des Oberschuhs angeordnet und weist eine größere Breite als der Abstand der hinteren Befestigungspunkte auf, so dass der horizontale Abstand zwischen den Riemen im Bereich des Quersteges größer als im Bereich der hinteren Befestigungspunkte ist. Dadurch wird die Hufform gut eingefasst und es entsteht bei geschlossenen, angezogenen Riemen ein leichter Druck von außen her auf die seitlichen Hufbereiche.

Eine vorteilhafte Ausgestaltung sieht vor, dass der Quersteg an seinen beiden Enden jeweils mindestens eine Durchbrechung aufweist, welche mit zugeordneten Durchbrechungen an den beiden Riemen und jeweils zugeordneten Befestigungselementen korrespondiert. Durch mehrere vorhandene Durchbrechungen sind Quersteg und/oder Riemen wahlweise auch verstellbar, beispielsweise um einen breiteren Huf besser mit den Riemen einzufassen. Dazu besitzen Quersteg und/oder Riemen zusätzliche, benachbarte Durchbrechungen als alternative Befestigungspositionen zur Verstellung des Riemenabstandes in diesem Bereich. Diese grundsätzliche Einstellung und Zuordnung der Durchbrechungen muss somit nur beim erstmaligen Anpassen des Hufschuhs am Huf erfolgen.

In einer weiteren vorteilhaften Ausgestaltung ist vorgesehen, dass der Quersteg aus einem biegeelastischen, in Längsrichtung druckfesten Material mit gepolsterter Oberfläche oder einem entsprechenden Werkstoffverbund ausgeführt ist, welcher diese Eigenschaften erfüllt. Vorzugsweise kommt dafür ein Kunststoff-Schaumwerkstoff oder ein Werkstoffverbund mit einer Kunststoff-Werkstoffkombination, insbesondere mit Neopren als gepolsterte Oberfläche, zum Einsatz.

Eine bevorzugte Ausführungsform des Hufschuhs weist nur einen vorderen Befestigungspunkt am Oberschuh als Aufnahme für mindestens einen Riemen auf. Dieser ist vorzugsweise asymmetrisch zur Mittelachse des Hufschuhs, insbesondere bis zu 20 Grad versetzt zur Mittelachse des Hufschuhs angeordnet. Der Versatz erfolgt zur Seite mit dem Schlaufenriemen hin, damit der Schnallenriemen von der anderen Seite her die Flanke des Hufs gut umgreift und im richtigen, im Hinblick auf Materialschonung und gute Zugbelastung geeigneten Winkel den Befestigungspunkt erreicht.

So dient vorteilhafterweise der vorderere Befestigungspunkt am Oberschuh als Umlenkpunkt für einen Riemen, insbesondere den Schnallenriemen. Daher ist der vorderere Befestigungspunkt insbesondere als Schnallen-Bügel ausgebildet, welcher an einer Seite mit einer Schlaufe umfasst und damit am Oberschuh fixiert ist, und an der parallel gegenüberliegenden, freien Seite eine aufgesetzte Rolle aufweist. Diese zylindrische Rolle bewirkt ein Abrollen des durchgeführten Schnallenriemens mit seiner flachen Seite, so dass an diesem Umlenkpunkt relativ wenig Zugkraft aufgewendet werden muss, um den Schnallenriemen am Huf zu verspannen.

Daher ist in noch einer vorteilhaften Ausführungsform der Schlaufenriemen kürzer als der Schnallenriemen ausgeführt, und der Endbereich des Schlaufenriemens ist zu einer Schlaufe geformt. Diese Schlaufe dient zum Durchgriff des zugeordneten Schnallenriemens und weist daher etwas größere Innenabmessungen als die Außenabmessungen des Schnallenriemens auf. Der Durchgriff des Schnallenriemens durch den Schlaufenriemen erfolgt etwa im rechten Winkel, so dass einerseits eine gute Passung in der Schlaufe und andererseits wenig Reibungswiderstand beim Durchziehen entsteht. Zudem wird das Material geschont, da bei dieser Zuordnung, welche insbesondere von der Länge des Schlaufenriemens sowie der Position des vordereren Befestigungspunktes abhängt, die Reibung an der Schlaufenwand und Punktbelastungen vermieden werden. Zum Ausbilden der Schlaufe im Endbereich des Schlaufenriemens wird dieser von innen nach außen hin um 180 Grad umgelegt und mit mindestens einem Befestigungselement im Überlappungsbereich fixiert.

Vorteilhafterweise ist der Schnallenriemen länger als der Schlaufenriemen ausgebildet, weist vorzugsweise in gestreckter Form die eineinhalb- bis zweifache Länge des Schlaufenriemens auf, und ist auf etwa der Hälfte seiner Länge mit einer außen aufgesetzten Schnalle und am freien Ende mit einer dieser Schnalle zugeordneten Lochung in Längsrichtung versehen. Diese Lochung gewährleistet ausreichend Längenverstellmöglichkeiten, insbesondere wegen der unterschiedlichen Hufformen, aber auch zum Anpassen der Spannkraft des gesamten Fixierungssystems am Huf. Hierbei wird deutlich, dass die Neuerung mit nur einer Schnalle eine sichere, schnelle und einfache Fixierung des Hufschuhs ermöglicht.

Bevorzugt sind beide Riemen mindestens auf der zum Huf gerichteten Seite mit Polstern versehen, wobei sich das Polster am Schlaufenriemen im Wesentlichen im Bereich zwischen dem Quersteg und der Schlaufe sowie am Schnallenriemen im Wesentlichen im Bereich zwischen dem Quersteg und der aufgesetzten Schnalle befindet.

Bei einer vorteilhaften Ausgestaltung der Polster sind diese einseitig mit den Riemen verklebt oder auf die Riemen aufgeschoben und/oder mehrseitig verklebt. Weiterhin können die Polster auch von einer Seite her auf die zum Huf gerichtete Kante der Riemen U-förmig aufgesteckt und verklebt sein. Die Riemen sind dann mindestens in Teilbereichen ummantelt. Alternativ oder ergänzend zur Verklebung können die Polster mit jeweils mindestens einem ringförmigen Schrumpfschlauchabschnitt, insbesondere im Endbereich eines Polsters, am zugeordneten Riemen fixiert sein. Vorzugsweise bestehen die Polster aus einem Kunststoff-Schaumwerkstoff, insbesondere aus Neopren.

Eine weitere bevorzugte Ausgestaltung sieht vor, dass die Riemen als zugfeste, biegeelastische Flachriemen gestaltet sind, vorzugsweise aus einem Kunststoff-Werkstoff aus der Gruppe der Biothane bestehen. Wahlweise können die Riemen in Signalfarben ausgeführt sein und/oder weisen Reflexeigenschaften aus. Entweder besitzt das Material der Riemen selbst über den gesamten Querschnitt die vorstehenden Eigenschaften oder es sind Teilbereiche bzw. mindestens eine äußere Schicht mit einem derartigen Material ausgeführt. Außerdem kann die Oberfläche in Teilbereichen eine entsprechende Beschichtung oder zusätzlich angebrachte Teile mit vorstehenden Eigenschaften aufweisen. Der Einsatz von Signalfarben hilft bei der Individualisierung und Zuordnung zu Tierbesitzern und/oder zu Tieren oder zu sonstiger Ausrüstung, oder beim Sortieren und Kenntlichmachen von unterschiedlichen Größen. Weiterhin ist die Chance des Wiederfindens im Falle eines Verlustes, zum Beispiel im Gelände, erhöht.

Zur Verbindung von Riemen, Quersteg, Oberschuh, Schnalle und/oder zur Bildung einer Schlaufe werden vorteilhafterweise Hülsenmuttern auf der dem Huf zugewandten Seite eingesetzt. Diese durchgreifen zugeordnete Durchbrechungen in den vorstehend erwähnten Komponenten mindestens teilweise und sind auf der vom Huf abgewandten Außenseite mit Schrauben, insbesondere in Kombination mit Unterlegscheiben und/oder Zahnscheiben aus Kunststoff und/oder Edelstahl, fixiert. Kunststoffe kommen dabei nach Möglichkeit zum Einsatz, um Gewicht zu sparen.

Mit der Erfindung wird ein optimierter Hufschuh geschaffen, welcher sich insbesondere durch Vorteile im Tragekomfort für das Tier sowie in der Handhabungsfreundlichkeit für den Tierhalter auszeichnet. Das erfindungsgemäße Befestigungssystem mit nur zwei zu handhabenden Riemen und einer zentralen Schnalle bewirkt, dass der Huf sehr gut umfasst wird. Zusammen mit einer vollständig elastischen Sohle und einem fast geschlossenen elastischen Oberschuh wird eine gute Tastsicherheit erreicht.

Das Befestigen der Hufschuhes mit den beiden Riemen ist sehr einfach, sicher und klar verständlich, indem zuerst der Schnallenriemen durch die Schlaufe des Schlaufenriemens geführt wird, dann der Schnallenriemen durch den vorderen Umlenkpunkt gezogen wird und anschließend mit der zentralen Schnalle fixiert wird. Außerdem sind keine losen Teile vorhanden. Durch die Formgebung und den Zuschnitt der Riemen ist die Positionierung und Anwendung schlüssig vorgegeben. Für eine erste Anwendung eines neuerungsgemäßen Hufschuhes entsteht somit kein Erklärungs- und Schulungsaufwand.

Die erfindungsgemäße Riemenführung bringt eine optimale Stabilität und Verliersicherheit, vermindert den Verschleiß und erhöht insgesamt die Nutzungsdauer eines Hufschuhes. Das gesamte neue Hufschuh-Konzept ist sehr robust und unanfällig gegen Verschmutzungen bzw. lässt sich einfach reinigen.

Mit nur einer zentralen Schnalle ist erfindungsgemäß ein Anpassen der Spannkraft des gesamten Fixierungssystems am Huf möglich. Dies begründet die Einfachheit, Schnelligkeit sowie die Flexibilität in der Nutzung und Abstimmung auf einen Huf.

Vorgesehen sind verschiedene, im Wesentlichen baugleiche neuerungsgemäße Hufschuhausfertigungen in einer Größenstaffelung, um eine grundsätzliche Anpassung an verschiedene Hufgrößen zu erreichen. Dies betrifft im Wesentlichen die Abstufung in vorgegebenen Größen von Sohle, Oberschuh sowie die entsprechenden Riemenlängen. In einer Größe besteht dann jeweils zusätzlich große Flexibilität in der individuellen Hufanpassung durch die verstellbaren Riemen und den optional verstellbaren Quersteg.

Die Zeichnung stellt ein Ausführungsbeispiel der Erfindung dar und zeigt den schematischen Aufbau eines Hufschuhes für Huftiere, jeweils mit geschlossenem Riemen-Befestigungssystem:

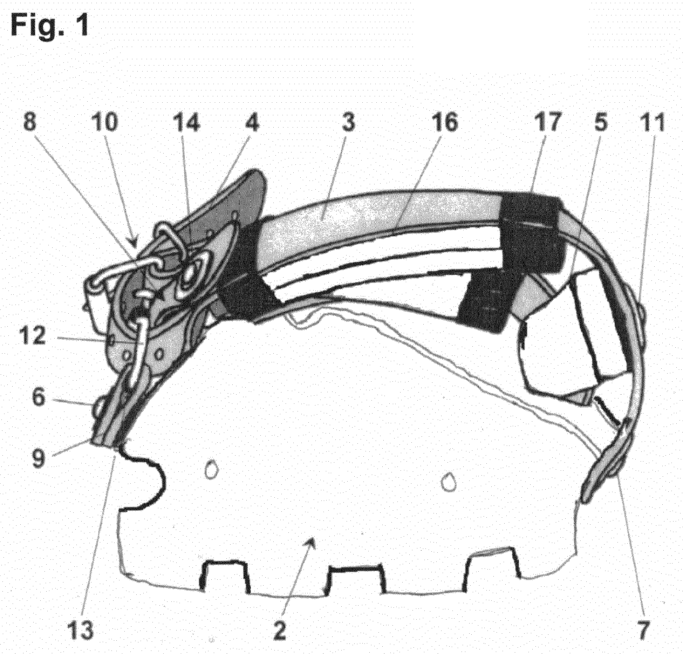

- Fig. 1:: in der Seitenansicht,

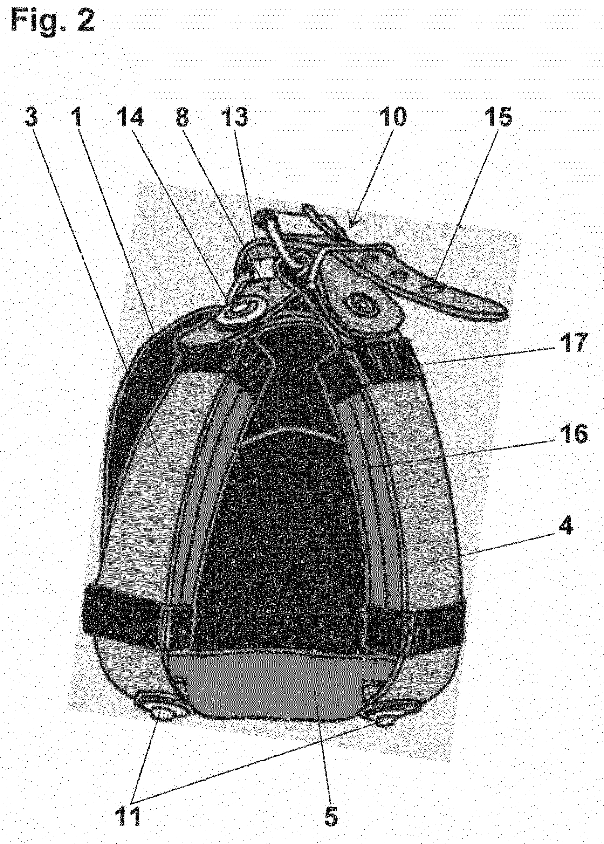

- Fig. 2:: in der Draufsicht,

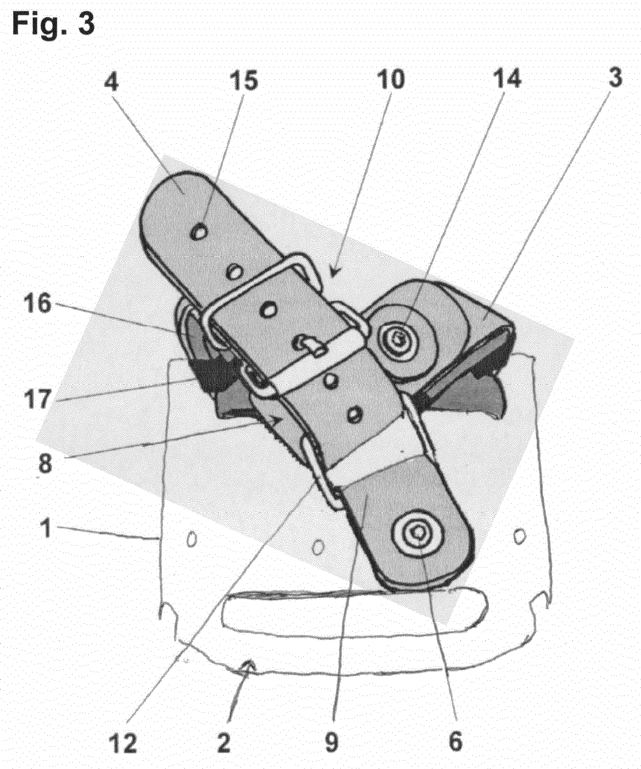

- Fig. 3:: in der Vorderansicht und

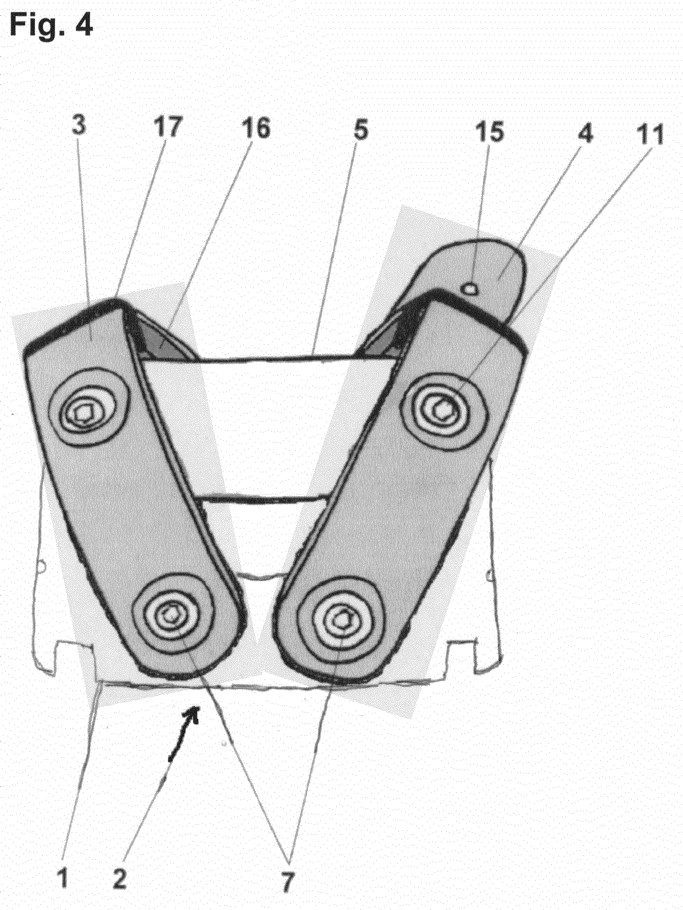

- Fig. 4:: in der Ansicht von hinten.

Der Hufschuh für Huftiere besteht aus einem die Hornkapsel und die Hufsohle eines Hufes umgreifenden, schalenartigen Oberschuh 1 mit seitlichen Begrenzungswänden und einer mit dem Oberschuh 1 verbundenen Sohle 2.

Weiterhin umfasst der Hufschuh ein Spannmittel zum Fixieren desselben an der Hornkapsel, welches im Wesentlichen aus einem ersten und einem zweiten Riemen 3, 4 besteht, welche im vorderen Bereich direkt miteinander und im hinteren Bereich mit einem Quersteg 5 aneinander fixiert sind. Die Riemen 3, 4 sind an einem vorderen, etwa mittig am Hufschuh platzierten Befestigungspunkt 6 lösbar sowie an zwei hinteren Befestigungspunkten 7 fest mit dem Oberschuh 1 verbunden. Dabei ist der erste Riemen 3 als Schlaufenriemen und der zweite Riemen 4 als Schnallenriemen ausgebildet, wobei der Schnallenriemen 4 den Schlaufenriemen 3 in einer Schlaufe 8 im vorderen Bereich durchgreift, durch eine Aufnahme 9 am vorderen Befestigungspunkt 6 am Oberschuh 1 geführt ist, und mit einer Schnalle 10 fixierbar ist.

Ein Quersteg 5 im hinteren Bereich ist als Ballensteg ausgeführt und stellt eine etwa horizontale Verbindung zwischen den beiden Riemen 3, 4 dar. Der Quersteg 5 befindet sich in vertikaler Richtung beabstandet zur Oberkante des Oberschuhs 1 und weist eine größere Breite als der Abstand der hinteren Befestigungspunkte 7 auf, so dass der horizontale Abstand zwischen den Riemen 3, 4 im Bereich des Quersteges 5 größer als im Bereich der hinteren Befestigungspunkte 6 ist; insbesondere um der Ballenform gut zu entsprechen. Der Quersteg 5 weist an seinen beiden Enden jeweils mindestens eine Durchbrechung auf, welche mit zugeordneten Durchbrechungen an den beiden Riemen 3, 4 und jeweils zugeordneten Befestigungselementen 11 korrespondiert. Der Quersteg 5 besteht aus einem biegeelastischen, in Längsrichtung druckfesten Material mit gepolsterter Oberfläche oder einem entsprechenden Werkstoffverbund mit gleichen Eigenschaften.

Der vorderere Befestigungspunkt 6 am Oberschuh 1 dient als Aufnahme für mindestens einen Riemen 3,4 und ist asymmetrisch zur Mittelachse des Hufschuhs, und zur Seite mit dem Schlaufenriemen 3 hin, angeordnet. Damit fungiert der vorderere Befestigungspunkt 6 am Oberschuh 1 als Umlenkpunkt für den Schnallenriemen 4 und ist als Schnallen-Bügel 12 ausgebildet, welcher an einer Seite mit einer Schlaufe als Aufnahme 9 umfasst und damit am Oberschuh fixiert ist, und an der parallel gegenüberliegenden, freien Seite eine aufgesetzte Rolle 13 aufweist.

Zur günstigen Positionierung am Huf ist der Schlaufenriemen 3 kürzer als der Schnallenriemen 4 ausgeführt. Weiterhin ist der Endbereich des Schlaufenriemens 3 zur Schlaufe 8 geformt, wobei diese Schlaufe 8 zum Durchgriff des zugeordneten Schnallenriemens 4 dient. Zum Ausbilden der Schlaufe 8 ist der Endbereich des Schlaufenriemens 3 von innen nach außen hin um 180 Grad umgelegt und mit mindestens einem Befestigungselement 14 im Überlappungsbereich fixiert. Der Schnallenriemen 4 ist länger als der Schlaufenriemen 3 ausgebildet, trägt auf etwa der Hälfte seiner Länge die außen aufgesetzte Schnalle 10 und ist am freien Ende mit einer dieser Schnalle 10 zugeordneten Lochung 15 in Längsrichtung versehen.

Beide Riemen 3, 4 sind auf der zum Huf gerichteten Seite mit Polstern 16, hier in zwei Lagen dargestellt, versehen. Dabei befindet sich der gepolsterte Abschnitt der Riemen 3, 4 nur in den üblichen Anlagebereichen am Huf. Das heißt am Schlaufenriemen 3 im Wesentlichen im Bereich zwischen dem Quersteg 5 und der Schlaufe 8 sowie am Schnallenriemen 4 im Wesentlichen im Bereich zwischen dem Quersteg 5 und der aufgesetzten Schnalle 10. Die Polster 16 sind im gezeigten Ausführungsbeispiel mit den Riemen 3, 4 und untereinander verklebt. Außerdem bilden ringförmige Schrumpfschlauchabschnitte 17 eine zusätzliche Fixierung für die Polster 16 in deren Endbereichen am jeweiligen Riemen 3, 4.

## Patentansprüche

1. Hufschuh für Huftiere, bestehend aus einem die Hornkapsel und die Hufsohle mindestens teilweise umgreifenden, schalenartigen Oberschuh (1) mit seitlichen Begrenzungswänden, einem Spannmittel zum Fixieren des Hufschuhes an der Hornkapsel, sowie einer sich über die gesamte Huflauffläche erstreckenden, mit dem Oberschuh (1) verbundenen Sohle (2),
wobei das Spannmittel im Wesentlichen aus einem ersten und einem zweiten Riemen (3, 4) besteht, **dadurch gekennzeichnet,**
**dass** der erste und der zweite Riemen (3, 4) im vorderen Bereich direkt miteinander und im hinteren Bereich mit einem Quersteg (5) aneinander fixierbar sind, und dass die Riemen (3, 4) mindestens an einem vorderen Befestigungspunkt (6) lösbar sowie an mindestens einem hinteren Befestigungspunkt (7) fest mit dem Oberschuh (1) verbunden sind.

2. Hufschuh nach Anspruch 1,
**dadurch gekennzeichnet, dass** der erste Riemen (3) als Schlaufenriemen und der zweite Riemen (4) als Schnallenriemen ausgebildet ist, wobei der Schnallenriemen (4) den Schlaufenriemen (3) in einer Schlaufe (8) im vorderen Bereich durchgreift, durch eine Aufnahme (9) am vorderen Befestigungspunkt (6) am Oberschuh (1) geführt ist und mit einer Schnalle (10) fixierbar ist.

3. Hufschuh nach Anspruch 1 oder 2,
**dadurch gekennzeichnet, dass** die Riemen (3, 4) an zwei hinteren Befestigungspunkten (7) am Oberschuh (1) fixiert sind, wobei die Befestigungspunkte (7) beabstandet zueinander und symmetrisch zur Mittelachse des Hufschuhs angeordnet sind.

4. Hufschuh nach einem der Ansprüche 1 bis 3,
**dadurch gekennzeichnet, dass** der Quersteg (5) im hinteren Bereich als Ballensteg ausgeführt ist und eine etwa horizontale Verbindung zwischen den beiden Riemen (3, 4) darstellt.

5. Hufschuh nach einem der Ansprüche 1 bis 4,
**dadurch gekennzeichnet, dass** der Quersteg (5) in vertikaler Richtung beabstandet zur Oberkante des Oberschuhs (1) angeordnet ist und eine größere Breite als der Abstand der hinteren Befestigungspunkte (7) aufweist, so dass der horizontale Abstand zwischen den Riemen (3, 4) im Bereich des Quersteges (5) größer als im Bereich der hinteren Befestigungspunkte (7) ist.

6. Hufschuh nach einem der Ansprüche 1 bis 5,
**dadurch gekennzeichnet, dass** der Quersteg (5) an seinen beiden Enden jeweils mindestens eine Durchbrechung aufweist, welche mit zugeordneten Durchbrechungen an den beiden Riemen (3, 4) und jeweils zugeordneten Befestigungselementen (11) korrespondiert, wobei Quersteg (5) und/oder Riemen (3, 4) wahlweise auch verstellbar sind, indem diese zusätzliche, benachbarte Durchbrechungen als Alternativpositionen zur Verstellung des Riemenabstandes in diesem Bereich aufweisen.

7. Hufschuh nach einem der Ansprüche 1 bis 6,
**dadurch gekennzeichnet, dass** der Quersteg (5) aus einem biegeelastischen, in Längsrichtung druckfesten Material mit gepolsterter Oberfläche oder einem entsprechenden Werkstoffverbund ausgeführt ist, vorzugsweise einem Kunststoff-Schaumwerkstoff oder einem Werkstoffverbund mit einer Kunststoff-Werkstoffkombination, insbesondere mit Neopren als gepolsterte Oberfläche.

8. Hufschuh nach einem der Ansprüche 1 bis 7,
**dadurch gekennzeichnet, dass** das vorderer Befestigungspunkt (6) am Oberschuh (1) als Aufnahme (9) für mindestens einen Riemen (3, 4) vorgesehen ist, welcher asymmetrisch zur Mittelachse des Hufschuhs, insbesondere bis zu 20 Grad versetzt zur Mittelachse des Hufschuhs, und zur Seite mit dem Schlaufenriemen (3) hin, angeordnet ist.

9. Hufschuh nach einem der Ansprüche 1 bis 8,
**dadurch gekennzeichnet, dass** der vorderere Befestigungspunkt (6) am Oberschuh (1) als Umlenkpunkt für einen Riemen (3, 4), insbesondere den Schnallenriemen (4), vorgesehen und insbesondere als Schnallen-Bügel (12) ausgebildet ist, welcher an einer Seite mit einer Schlaufe umfasst und damit am Oberschuh (1) fixiert ist, und an der parallel gegenüberliegenden, freien Seite eine aufgesetzte Rolle (13) aufweist.

10. Hufschuh nach einem der Ansprüche 2 bis 9,
**dadurch gekennzeichnet, dass** der Schlaufenriemen (3) kürzer als der Schnallenriemen (4) ausgeführt ist, und dass der Endbereich des Schlaufenriemens (3) zu einer Schlaufe (8) geformt ist, wobei die Schlaufe (8) zum Durchgriff des zugeordneten Schnallenriemens (4) dient und daher etwas größere Innenabmessungen als die Außenabmessungen des Schnallenriemens (4) aufweist.

11. Hufschuh nach einem der Ansprüche 2 bis 10,
**dadurch gekennzeichnet, dass** zum Ausbilden der Schlaufe (8) im Endbereich des Schlaufenriemens (3) dieser von innen nach außen hin um 180 Grad umgelegt und mit mindestens einem Befestigungselement (14) im Überlappungsbereich fixiert ist.

12. Hufschuh nach einem der Ansprüche 2 bis 11,
**dadurch gekennzeichnet, dass** der Schnallenriemen (4) länger als der Schlaufenriemen (3) ausgebildet ist, vorzugsweise in gestreckter Form die eineinhalb- bis zweifache Länge des Schlaufenriemens (3) aufweist, auf etwa der Hälfte seiner Länge mit einer außen aufgesetzten Schnalle (10) und am freien Ende mit einer dieser Schnalle (10) zugeordneten Lochung (15) in Längsrichtung versehen ist.

13. Hufschuh nach einem der Ansprüche 2 bis 12,
**dadurch gekennzeichnet, dass** beide Riemen (3, 4) mindestens auf der zum Huf gerichteten Seite mit Polstern (16) versehen sind, wobei sich das Polster (16) am Schlaufenriemen (3) im Wesentlichen im Bereich zwischen dem Quersteg (5) und der Schlaufe (8) sowie am Schnallenriemen (4) im Wesentlichen im Bereich zwischen dem Quersteg (5) und der aufgesetzten Schnalle (10) befindet.

14. Hufschuh nach Anspruch 13,
**dadurch gekennzeichnet, dass** die Polster (16) einseitig mit den Riemen (3, 4) verklebt sind oder auf die Riemen (3, 4) aufgeschoben sind und/oder mehrseitig verklebt sind, und/oder dass die Polster (16) mit jeweils mindestens einem ringförmigen Schrumpfschlauchabschnitt (17) im Endbereich eines Polsters (16) am zugeordneten Riemen (3, 4) fixiert sind.

15. Hufschuh nach einem der Ansprüche 2 bis 14,
**dadurch gekennzeichnet, dass** zur Verbindung von Riemen (3, 4), Quersteg (5), Oberschuh (1), Schnalle (10) und/oder zur Bildung einer Schlaufe (8) Hülsenmuttern auf der dem Huf zugewandten Seite eingesetzt sind, welche zugeordnete Durchbrechungen in den vorstehend erwähnten Komponenten mindestens teilweise durchgreifen und auf der vom Huf abgewandten Außenseite mit Schrauben, insbesondere in Kombination mit Unterlegscheiben und/oder Zahnscheiben aus Kunststoff und/oder Edelstahl, fixiert sind.

## Claims

1. A hoof shoe for hoofed animals, comprising a shell-like upper shoe (1) engaging at least partially around the horn capsule and the hoof sole, with lateral boundary walls, a clamping means for fixing the hoof shoe to the horn capsule, as well as a sole (2) extending over the entire hoof tread area and connected to the upper shoe (1), wherein the clamping means essentially comprises a first and a second strap (3, 4), **characterised in that** the first and the second strap (3, 4) can be directly fixed to one another in the front region and with a cross-bar (5) in the rear region, and that the straps (3, 4) are connected to the upper shoe (1) detachably at at least one front fixing point (6) and fixedly at at least one rear fixing point (7).

2. The hoof shoe according to claim 1,
**characterised in that** the first strap (3) is constituted as a loop strap and the second strap (4) as a buckle strap, wherein the buckle strap (4) engages through the loop strap (3) in a loop (8) in the front region, is passed through a slot (9) at the front fixing point (6) on the upper shoe (1) and can be fixed with a buckle (10).

3. The hoof shoe according to claim 1 or 2,
**characterised in that** the straps (3, 4) are fixed to the upper shoe (1) at two rear fixing points (7), wherein the fixing points (7) are arranged spaced apart from one another and symmetrically with respect to the central axis of the hoof shoe.

4. The hoof shoe according to any one of claims 1 to 3, **characterised in that** the cross-bar (5) is constituted as a ball bar in the rear region and represents a roughly horizontal connection between the two straps (3, 4).

5. The hoof shoe according to any one of claims 1 to 4,
**characterised in that** the cross-bar (5) is arranged spaced apart from the upper edge of the upper shoe (1) in the vertical direction and has a greater width than the distance between the rear fixing points (7), so that the horizontal distance between the straps (3, 4) in the region of the cross-bar (5) is greater than in the region of the rear fixing points (7).

6. The hoof shoe according to any one of claims 1 to 5,
**characterised in that** the cross-bar (5) comprises at each of its two ends at least one perforation which corresponds to assigned perforations in the two straps (3, 4) and respectively assigned fixing elements (11), wherein cross-bar (5) and/or straps (3, 4) are also optionally adjustable **in that** the latter comprise additional, adjacent perforations as alternative positions for adjusting the strap spacing in this region.

7. The hoof shoe according to any one of claims 1 to 6,
**characterised in that** the cross-bar (5) is formed from a flexible-elastic material compression-resistant in the longitudinal direction with a padded surface or a corresponding material composite, preferably a plastic foam material or a material composite with a plastic-material combination, in particular with neoprene as a padded surface.

8. The hoof shoe according to any one of claims 1 to 7,
**characterised in that** the front fixing point (6) on the upper shoe (1) is provided as a slot (9) for at least one strap (3, 4), which is arranged asymmetrically with respect to the central axis of the hoof shoe, in particular up to 20 degrees offset with respect to the central axis of the hoof shoe, and towards the side with the loop strap (3).

9. The hoof shoe according to any one of claims 1 to 8,
**characterised in that** the foremost fixing point (6) on the upper shoe (1) is provided as a deflection point for a strap (3, 4), in particular the buckle strap (4), and is constituted in particular as a buckle strap (12) which is surrounded at one side by a loop and is thus fixed to the upper shoe (1), and at the free side lying opposite in parallel comprises a fitted roller (13).

10. The hoof shoe according to any one of claims 2 to 9,
**characterised in that** the loop strap (3) is constituted shorter than the buckle strap (4), and that the end region of the loop strap (3) is formed into a loop (8), wherein the loop (8) serves for the passage of the assigned buckle strap (4) and therefore has somewhat greater internal dimensions than the external dimensions of the buckle strap (4).

11. The hoof shoe according to any one of claims 2 to 10,
**characterised in that**, for the formation of the loop (8) in the end region of the loop strap (3), the latter is turned inside out through 180 degrees and is fixed with at least one fixing element (14) in the overlapping region.

12. The hoof shoe according to any one of claims 2 to 11,
**characterised in that** the buckle strap (4) is constituted longer than the loop strap (3), preferably in the stretched form has one and a half to twice the length of the loop strap (3), and is provided in the longitudinal direction over roughly half its length with an externally fitted buckle (10) and at its free end with a punched hole (15) assigned to this buckle (10).

13. The hoof shoe according to any one of claims 2 to 12,
**characterised in that** both straps (3, 4) are provided with pads (16) at least on the side facing the hoof, wherein the pad (16) on the loop strap (3) is located essentially in the region between the cross-bar (5) and the loop (8) and on the buckle strap (4) is located essentially in the region between the cross-bar (5) and the fitted buckle (10).

14. The hoof shoe according to claim 13,
**characterised in that** the pads (16) are glued on one side to the straps (3, 4) or pushed onto the straps (3, 4) and/or are glued multi-sided, and/or that the pads (16) are fixed to the assigned strap (3, 4) in each case with at least one annular shrink-on tube portion (17) in the end region of a pad (16).

15. The hoof shoe according to any one of claims 2 to 14,
**characterised in that**, for the connection of straps (3, 4), cross-bar (5), upper shoe (1), buckle (10) and/or for the formation of a loop (8), use is made of sleeve nuts on the side facing the hoof, said sleeve nuts engaging at least partially through assigned perforations in the aforementioned components and being fixed on the outer side facing away from the hoof with screws, in particular in combination with plain washers and/or toothed washers made of plastic and/or special steel.

## Revendications

1. Hipposandale pour ongulés, constituée d'une empeigne (1) du genre coque entourant au moins partiellement la boîte cornée et le dessous de sabot, avec des parois de délimitation latérales, un moyen de serrage destiné à fixer l'hipposandale sur la boîte cornée, et une semelle (2) reliée à l'empeigne (1) et s'étendant sur l'ensemble de la surface de marche du sabot, dans laquelle le moyen de serrage est essentiellement constitué d'une première et d'une deuxième sangle (3, 4), **caractérisée en ce que** les première et deuxième sangles (3, 4) peuvent être fixées l'une à l'autre directement dans la région avant et par le biais d'une traverse (5) dans la région arrière, et **en ce que** les sangles (3, 4) sont reliées de façon détachable au niveau d'un point de fixation avant (6) et fixement à l'empeigne (1) au niveau d'au moins un point de fixation arrière (7).

2. Hipposandale selon la revendication 1,
**caractérisée en ce que** la première sangle (3) est conçue comme une sangle à boucle et la deuxième sangle (4) comme une sangle à clip, la sangle à clip (4) traversant la sangle à boucle (3) dans une boucle (8) dans la région avant, tout en étant guidée sur l'empeigne (1) par une admission (9) au niveau du point de fixation avant (6), et pouvant être fixée à l'aide d'un clip (10).

3. Hipposandale selon la revendication 1 ou 2,
**caractérisée en ce que** les sangles (3, 4) sont fixées à l'empeigne (1) au niveau de deux points de fixation arrière (7), les points de fixation (7) étant espacés l'un de l'autre et disposés symétriquement à l'axe médian de l'hipposandale.

4. Hipposandale selon l'une des revendications 1 à 3,
**caractérisée en ce que** la traverse (5) est conçue comme une traverse de coussinet dans la région arrière et représente une liaison approximativement horizontale entre les deux sangles (3, 4).

5. Hipposandale selon l'une des revendications 1 à 4,
**caractérisée en ce que** la traverse (5) est disposée à distance du bord supérieur de l'empeigne (1) dans la direction verticale, et présente une largeur supérieure à l'espacement entre les points de fixation arrière (7), de telle façon que l'espacement horizontal entre les sangles (3, 4) est plus grand dans la région de la traverse (5) que dans la région des points de fixation arrière (7).

6. Hipposandale selon l'une des revendications 1 à 5,
**caractérisée en ce que** la traverse (5) présente au moins un perçage à chacune de ses deux extrémités, lesdits perçages correspondant à des perçages dans les deux sangles (3, 4) et des éléments de fixation (11) respectifs, la traverse (5) et/ou les sangles (3, 4) pouvant également être réglées au choix, sachant qu'elles possèdent des perçages voisins supplémentaires offrant des positions alternatives pour le réglage de l'espacement des sangles dans cette région.

7. Hipposandale selon l'une des revendications 1 à 6, **caractérisée en ce que** la traverse (5) est conçue à partir d'un matériau élastique en flexion, résistant à la pression dans la direction longitudinale, avec une surface supérieure matelassée, ou d'un matériau composite correspondant, de préférence à partir d'une matière en mousse synthétique ou d'une matière composite avec une combinaison de matières synthétiques, en particulier avec du néoprène comme surface supérieure matelassée.

8. Hipposandale selon l'une des revendications 1 à 7,
**caractérisée en ce que** le point de fixation avant (6) sur l'empeigne (1), lequel est disposé de façon asymétrique par rapport à l'axe médian de l'hipposandale, en particulier décalé jusqu'à 20 degrés par rapport à l'axe médian de l'hipposandale, et latéralement avec la sangle à boucle (3), sert d'admission (9) pour au moins une sangle (3, 4).

9. Hipposandale selon l'une des revendications 1 à 8,
**caractérisé en ce que** le point de fixation avant (6) sur l'empeigne (1) sert de point de déviation pour une sangle (3, 4), en particulier la sangle à clip (4), tout en étant en particulier conçu comme un étrier à clip (12), lequel est entouré par une boucle d'un côté et ainsi fixé à l'empeigne (1) et comporte un rouleau monté (13) sur le côté libre parallèlement opposé.

10. Hipposandale selon l'une des revendications 2 à 9,
**caractérisée en ce que** la sangle à boucle (3) est conçue plus courte que la sangle à clip (4), et **en ce que** la région terminale de la sangle à boucle (3) forme une boucle (8), la boucle (8) pouvant être traversée par la sangle à clip (4) correspondante et présentant par conséquent des dimensions intérieures supérieures aux dimensions extérieures de la sangle à clip (4).

11. Hipposandale selon l'une des revendications 2 à 10,
**caractérisée en ce que** pour la formation de la boucle (8) dans la région terminale de la sangle à boucle (3), celle-ci est rabattue de l'intérieur vers l'extérieur de 180 degrés et fixée dans la région de chevauchement à l'aide d'au moins un élément de fixation (14).

12. Hipposandale selon l'une des revendications 2 à 11,
**caractérisée en ce que** la sangle à clip (4) est conçue plus longue que la sangle à boucle (3) et présente de préférence une longueur une fois et demi à deux fois supérieure à celle de la sangle à boucle (3) à l'état allongé, tout en étant pourvue d'un clip (10) monté à l'extérieur sur environ la moitié de sa longueur, ainsi que d'un trou (15) attribué à ce clip (10) à l'extrémité libre dans la direction longitudinale.

13. Hipposandale selon l'une des revendications 2 à 12,
**caractérisée en ce que** les deux sangles (3, 4) sont pourvues de rembourrages (16), du moins sur le côté orienté vers le sabot, le rembourrage (16) étant, sur la sangle à boucle (3), situé essentiellement dans la région entre la traverse (5) et la boucle (8), et, sur la sangle à clip (4), essentiellement dans la région entre la traverse (5) et la boucle montée (10).

14. Hipposandale selon la revendication 13, **caractérisée en ce que** les rembourrages (16) sont collés aux sangles (3, 4) sur un côté ou glissés sur les sangles (3, 4), et/ou collés sur plusieurs côtés, et/ou **en ce que** les rembourrages (16) sont fixés à la sangle correspondante (3, 4) à l'aide d'au moins une section de gaine rétractable (17) annulaire respective dans la région terminale d'un rembourrage (16).

15. Hipposandale selon l'une des revendications 2 à 14,
**caractérisée en ce que** pour relier les sangles (3, 4), la traverse (5), l'empeigne (1), la boucle (10), et/ou pour former une boucle (8), des écrous en forme de douilles sont prévus sur le côté orienté vers le sabot, lesquels traversent au moins partiellement des perçages correspondants dans les composants cités ci-dessus, et sont fixés dans le côté opposé au sabot à l'aide de vis, en particulier e combinaison avec des rondelles et/ou des rondelles à dents en plastique et/ou en acier fin.
